(19) Europäisches Patentamt / European Patent Office / Office européen des brevets

(11) **EP 4 068 617 A1**

(12) **EUROPEAN PATENT APPLICATION**
published in accordance with Art. 153(4) EPC

(43) Date of publication:
**05.10.2022 Bulletin 2022/40**

(21) Application number: **19954027.9**

(22) Date of filing: **29.11.2019**

(51) International Patent Classification (IPC):
***H02P 27/06*** (2006.01)

(52) Cooperative Patent Classification (CPC):
**H02P 27/06**

(86) International application number:
**PCT/JP2019/046832**

(87) International publication number:
**WO 2021/106205 (03.06.2021 Gazette 2021/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **TAKAYAMA, Yuji**
  **Tokyo 100-8310 (JP)**
• **HATAKEYAMA, Kazunori**
  **Tokyo 100-8310 (JP)**
• **MATSUO, Haruka**
  **Tokyo 100-8310 (JP)**

(74) Representative: **Mewburn Ellis LLP**
**Aurora Building**
**Counterslip**
**Bristol BS1 6BX (GB)**

(54) **MOTOR DRIVE DEVICE, ELECTRIC VACUUM CLEANER, AND HAND DRYER**

(57)   A motor driver (2) includes an inverter (11) including a leg (5A) including switching elements (51, 52) connected in series, and a leg (5B) including switching elements (53, 54) connected in series, in which the leg (5A) and the leg (5B) are connected in parallel with a battery (10), to convert direct-current power supplied from the battery (10) into alternating-current power, and a shunt resistor (55) disposed on a path between the inverter (11) and the battery (10). The motor driver (2) controls conduction of the switching elements (51 to 54) so that the waveform of detection values of the shunt resistor (55) corresponds to a pulse train of a plurality of pulses. As a result of the control, a current change rate in a top section of each of the pulses in a period during which the polarity of the motor current flowing to the single-phase motor (12) remains the same changes exhibiting a tendency to decrease once and increase thereafter.

FIG.16

EP 4 068 617 A1

## Description

Field

The present invention relates to a motor driver for driving a single-phase motor, and a vacuum cleaner and a hand dryer including the motor driver.

Background

For an inverter for driving a single-phase motor, a configuration including a shunt resistor, which is current detecting means, between a connection point on the low potential side of lower switching elements of two legs of the inverter, and a negative-side terminal of a direct-current power supply so as to detect motor current flowing from the inverter to the single-phase motor has been taught. This configuration is a configuration called a "one-shunt system".

Citation List

Patent Literature

Patent Literature 1: Japanese Patent Application Laid-open No. 2017-200433

Summary

Technical Problem

According to Patent Literature 1, a threshold of current is provided to switch power supply to the single-phase motor. With this method, however, when a current change rate (dI/dt) obtained by differentiating motor current with time is large in a section in which motor induced voltage is large, the variation of shaft output of the single-phase motor is large. There have thus been problems in increasing vibration and noise, which is uncomfortable for users.

The present invention has been made in view of the above, and an object thereof is to provide a motor driver capable of reducing vibration and noise to reduce the discomfort for users.

Solution to Problem

To solve the aforementioned problems and achieve the object, a motor driver according to the present invention includes an inverter and a current detector. The inverter includes: a first leg including a first switching element of an upper arm and a second switching element of a lower arm connected in series; and a second leg including a third switching element of the upper arm and a fourth switching element of the lower arm connected in series. The first leg and the second leg are connected in parallel with a direct-current power supply. The inverter converts direct-current power supplied from the direct-current power supply into alternating-current power, and supplies the alternating-current power to a single-phase motor. The current detector is disposed on a path between the inverter and the direct-current power supply. The motor driver performs first control of controlling conduction of the first to fourth switching elements so that a waveform of physical quantities detected by the current detector corresponds to a pulse train of a plurality of pulses. As a result of the first control, the current change rate in the top section of each pulse in a period during which the polarity of the motor current flowing to the single-phase motor remains the same tends to decrease once and increase thereafter.

Advantageous Effects of Invention

A motor driver according to the present invention produces effects of suppressing vibration and noise, and of reducing discomfort for users.

Brief Description of Drawings

FIG. 1 is a configuration diagram of a motor driving system including a motor driver according to an embodiment.
FIG. 2 is a circuit diagram of an inverter illustrated in FIG. 1.
FIG. 3 is a block diagram illustrating a functional part for generating a pulse width modulation (PWM) signal among functional parts of a controller illustrated in FIG. 1.
FIG. 4 is a block diagram illustrating an example of a carrier comparator illustrated in FIG. 3.
FIG. 5 is a timing diagram illustrating examples of main waveforms in the carrier comparator illustrated in FIG. 4.
FIG. 6 is a block diagram illustrating a functional configuration for calculating an advanced phase to be input to the carrier comparator illustrated in FIG. 4.
FIG. 7 is a graph illustrating an example of a method for calculating the advanced phase in the embodiment.
FIG. 8 is a timing diagram used for explaining the relation between a voltage command and the advanced phase illustrated in FIG. 4.
FIG. 9 is a diagram illustrating one of current paths when power is supplied from a battery to a single-phase motor in FIG. 2.
FIG. 10 is a diagram illustrating another of the current paths when power is supplied from the battery to the single-phase motor in FIG. 2.
FIG. 11 is a diagram illustrating one of current paths when an inverter performs a flywheel operation in FIG. 2.
FIG. 12 is a diagram illustrating another of the current paths when the inverter performs a flywheel operation in FIG. 2.

FIG. 13 is a diagram illustrating one of current paths when the energy of the single-phase motor is regenerated into the battery in FIG. 2.

FIG. 14 is a diagram illustrating another of the current paths when the energy of the single-phase motor is regenerated into the battery in FIG. 2.

FIG. 15 is a diagram illustrating an example of a configuration of a current detecting unit illustrated in FIG. 1.

FIG. 16 is a diagram illustrating examples of several types of waveforms used for explanation of main points of control in the embodiment.

FIG. 17 is a diagram illustrating examples of several types of waveforms used for explanation of effects in the embodiment.

FIG. 18 is a graph illustrating an operating curve used for explaining operations in the embodiment.

FIG. 19 is a diagram illustrating an equivalent circuit of a single-phase motor used for explaining operations in the embodiment.

FIG. 20 is a first diagram illustrating examples of several types of waveforms used for explaining main points and effects of control in the embodiment.

FIG. 21 is a second diagram illustrating examples of several types of waveforms used for explaining main points and effects of control in the embodiment.

FIG. 22 is a configuration diagram of a vacuum cleaner including the motor driver according to the embodiment.

FIG. 23 is a configuration view of a hand dryer including the motor driver according to the embodiment.

Description of Embodiments

A motor driver, a vacuum cleaner, and a hand dryer according to an embodiment of the present invention will be described in detail below with reference to the accompanying drawings. Note that the present invention is not limited to the embodiment below. In addition, electrical connection and physical connection are hereinafter not distinguished from each other, and will be simply referred to as "connection" in the description.

Embodiment.

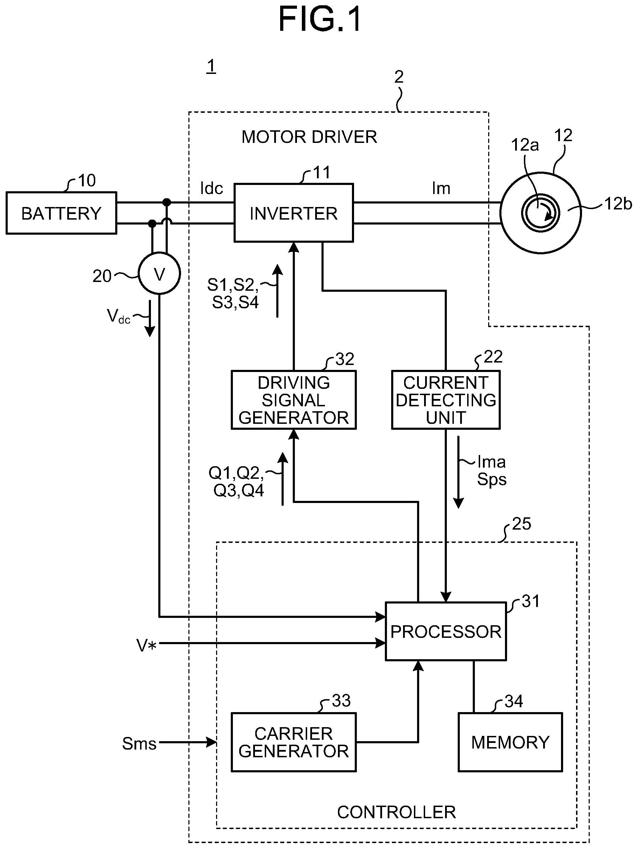

FIG. 1 is a configuration diagram of a motor driving system 1 including a motor driver 2 according to an embodiment. The motor driving system 1 illustrated in FIG. 1 includes a single-phase motor 12, the motor driver 2, a battery 10, and a voltage sensor 20.

The motor driver 2 supplies alternating-current power to the single-phase motor 12 to drive the single-phase motor 12. The battery 10 is a direct-current power supply for supplying direct-current power to the motor driver 2. The voltage sensor 20 detects direct-current voltage $V_{dc}$ output to the motor driver 2 from the battery 10.

The single-phase motor 12 is used as a rotating electric machine that rotates a motor fan (not illustrated). The single-phase motor 12 and the motor fan are mounted on equipment such as a vacuum cleaner and a hand dryer.

While the voltage sensor 20 detects the direct-current voltage $V_{dc}$ in the present embodiment, the voltage to be detected by the voltage sensor 20 is not limited to the direct-current voltage $V_{dc}$ output from the battery 10. The voltage to be detected by the voltage sensor 20 may be inverter output voltage, which is alternating-current voltage output form the inverter 11. The "inverter output voltage" is voltage output from the motor driver 2, and synonymous with "motor applied voltage", which will be describe later.

The motor driver 2 includes the inverter 11, a current detecting unit 22, a controller 25, and a driving signal generator 32. The inverter 11 drives the single-phase motor 12 by converting direct-current power supplied from the battery 10 into alternating-current power and supplying the alternating-current power to the single-phase motor 12. Note that the inverter 11 is assumed to be a single-phase inverter, but may be any inverter that can drive the single-phase motor 12. Although not illustrated in FIG. 1, a capacitor for voltage stabilization may be inserted between the battery 10 and the inverter 11.

The current detecting unit 22 generates and outputs a current signal Ima for recovering motor current Im and a protection signal Sps. While the current signal Ima is referred to as a current signal, a voltage signal obtained by conversion into a voltage value may alternatively be used.

A voltage amplitude command V*, the direct-current voltage $V_{dc}$ detected by the voltage sensor 20, the current signal Ima detected by the current detecting unit 22, the protection signal Sps, and an operation mode signal Sms are input to the controller 25. The voltage amplitude command V* is an amplitude value of a voltage command $V_m$, which will be described later. The controller 25 generates PWM signals Q1, Q2, Q3, and Q4 (hereinafter referred to as "Q1 to Q4") on the basis of the voltage amplitude command V* and the direct-current voltage $V_{dc}$. The PWM signals Q1 to Q4 control the inverter output voltage to apply a desired voltage to the single-phase motor 12. The controller 25 also generates PWM signals Q1 to Q4 for stopping operations of switching elements of the inverter 11 on the basis of the protection signal Sps. The PWM signals Q1 to Q4 stop the operation of the inverter 11, and power supply to the single-phase motor 12 is thus interrupted. The controller 25 also switches the operation mode of the controller 25 on the basis of the operation mode signal Sms. Details of the operation mode switching will be described later.

The driving signal generator 32 converts the PWM signals Q1 to Q4, output from the controller 25, into driving signals S1, S2, S3, and S4 for driving the inverter 11, and outputs the driving signals S1, S2, S3, and S4 to the inverter 11.

The controller 25 includes a processor 31, a carrier generator 33, and a memory 34. The processor 31 generates the PWM signals Q1 to Q4 described above. The processor 31 also performs computation processes relating to advance control in addition to computation processes relating to PWM control. The functions of a carrier comparator 38, a rotational speed calculator 42, and an advanced phase calculator 44, which will be described later, are implemented by the processor 31. The processor 31 may be what is called a central processing unit (CPU), a microprocessor, a personal computer, a microcomputer, or a digital signal processor (DSP).

A program to be read out by the processor 31 is stored in the memory 34. The memory 34 is used as a work area by the processor 31 in performing computation processes. The memory 34 is typically a nonvolatile or volatile semiconductor memory such as a random access memory (RAM), a flash memory, an erasable programmable ROM (EPROM), or an electrically erasable programmable ROM (EEPROM; registered trademark). Details of a configuration of the carrier generator 33 will be described later.

One example of the single-phase motor 12 is a brushless motor. In a case where the single-phase motor 12 is a brushless motor, a plurality of permanent magnets, which are not illustrated, are arranged along the circumferential direction of a rotor 12a of the single-phase motor 12. The permanent magnets are arranged with magnetizing directions thereof being alternately reversed in the circumferential direction to form a plurality of magnetic poles of the rotor 12a. A coil, which is not illustrated, is wound around a stator 12b of the single-phase motor 12. The motor current flows through the coil. While the number of magnetic poles of the rotor 12a is assumed to be four in the present embodiment, the number of magnetic poles may be other than four.

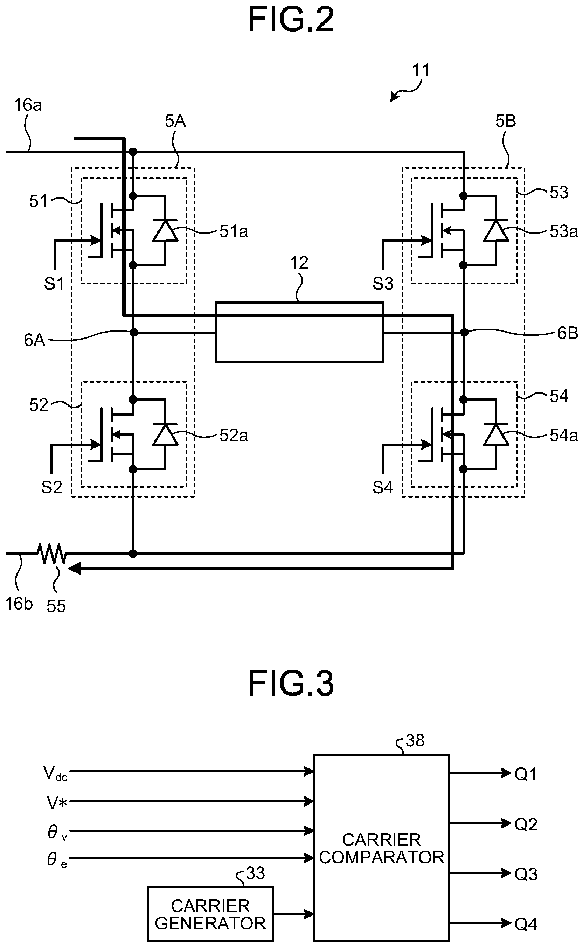

FIG. 2 is a circuit diagram of the inverter 11 illustrated in FIG. 1. The inverter 11 includes a plurality of switching elements 51, 52, 53, and 54 (hereinafter referred to as "51 to 54"), which are connected in a bridge configuration.

The switching elements 51 and 52 constitute a leg 5A as a first leg. The leg 5A is a series circuit including: the switching element 51 as a first switching element; and the switching element 52 as a second switching element, where the first switching element and the second switching element are connected in series.

The switching elements 53 and 54 constitute a leg 5B as a second leg. The leg 5B is a series circuit including: the switching element 53 as a third switching element; and the switching element 54 as a fourth switching element, where the third switching element and the fourth switching element are connected in series.

The legs 5A and 5B are connected between a high-potential side direct-current bus 16a and a low-potential side direct-current bus 16b in parallel with each other. Thus, the legs 5A and 5B are connected in parallel with each other at respective ends of the battery 10.

The switching elements 51 and 53 are disposed on the high potential side, and the switching elements 52 and 54 are disposed on the low potential side. Typically, in an inverter circuit, the high potential side is referred to as an "upper arm", and the low potential side is referred to as a "lower arm". Thus, the switching element 51 of the leg 5A may be referred to as "the first switching element of the upper arm", and the switching element 52 of the leg 5A may be referred to as "the second switching element of the lower arm". Similarly, the switching element 53 of the leg 5B may be referred to as "the third switching element of the upper arm", and the switching element 54 of the leg 5B may be referred to as "the fourth switching element of the lower arm".

A connection point 6A between the switching element 51 and the switching element 52 and a connection point 6B between the switching element 53 and the switching element 54 constitute alternating current ends of the bridge circuit. The single-phase motor 12 is connected between the connection point 6A and the connection point 6B.

Metal-oxide-semiconductor field-effect transistors (MOSFETs) are used for the switching elements 51 to 54. MOSFETs are one example of field-effect transistors (FETs).

A body diode 51a, connected in parallel between the drain and the source of the switching element 51, is formed in the switching element 51. A body diode 52a, connected in parallel between the drain and the source of the switching element 52, is formed in the switching element 52. A body diode 53a, connected in parallel between the drain and the source of the switching element 53, is formed in the switching element 53. A body diode 54a, connected in parallel between the drain and the source of the switching element 54, is formed in the switching element 54. Each of the body diodes 51a, 52a, 53a, and 54a is a parasitic diode formed inside a MOSFET, and used as a freewheeling diode. Alternatively, freewheeling diodes may be additionally connected. In addition, insulated gate bipolar transistors (IGBTs) may be used instead of MOSFETs.

The switching elements 51 to 54 are not limited to MOSFETs formed of a silicon-based material, and may be MOSFETs formed of wide band gap (WBG) semiconductors such as silicon carbide, gallium nitride, gallium oxide, or diamond.

A WBG semiconductor typically has a higher withstand voltage and a higher heat resistance than a silicon semiconductor. Thus, use of WBG semiconductors for the switching elements 51 to 54 increases: the withstand voltage characteristics; and the allowable current density of the switching elements. Thus, miniaturization of semiconductor modules incorporating the switching elements becomes possible. In addition, because WBG semiconductors also have high heat resistance, a radiator for radiating heat generated by the semiconductor modules can be miniaturized, and a radiation structure for radiating heat generated by the semiconductor modules can be simplified.

In addition, in FIG. 2, a shunt resistor 55 is inserted on the low-potential side direct-current bus 16b. The shunt resistor 55 is disposed on a path between the inverter 11 and the battery 10 (not illustrated in FIG. 2). The shunt resistor 55 is a detector that detects the direct current flowing between the inverter 11 and the battery 10. The shunt resistor 55 and the current detecting unit 22 constitute "current detecting means". In addition, the shunt resistor 55 constitutes a "current detector" in the current detecting means.

Note that the shunt resistor 55 may be any detector capable of detecting direct current flowing between the inverter 11 and the battery 10, and is not limited to that illustrated in FIG. 2. The shunt resistor 55 may be inserted on the direct-current bus 16a.

FIG. 3 is a block diagram illustrating a functional part for generating a PWM signal among functional parts of the controller 25 illustrated in FIG. 1.

In FIG. 3, an advance controlled advanced phase $\theta_v$ and a reference phase $\theta_e$ used for generation of a voltage command $V_m$, which will be described later, are input to the carrier comparator 38. The reference phase $\theta_e$ is a phase obtained by converting a rotor mechanical angle $\theta_m$, which is an angle from a reference position of the rotor 12a, into an electrical angle. Note that the motor driver according to the present embodiment has a configuration for so-called position-sensorless driving in which position sensor signals from a position sensor are not used. Thus, the rotor mechanical angle $\theta_m$ and the reference phase $\theta_e$ are estimated by computation. In addition, the "advanced phase" used herein refers to an "advance angle" of a voltage command expressed by a phase. Furthermore, the "advance angle" used herein refers to a phase difference between a motor applied voltage applied to the coil of the stator 12b and a motor induced voltage induced in the coil of the stator 12b. Note that the "advance angle" has a positive value when the motor applied voltage is ahead of the motor induced voltage.

In addition to the advanced phase $\theta_v$ and the reference phase $\theta_e$, a carrier generated by the carrier generator 33, the direct-current voltage $V_{dc}$, and the voltage amplitude command $V^*$ as an amplitude value of the voltage command $V_m$, are input to the carrier comparator 38. The carrier comparator 38 generates the PWM signals Q1 to Q4 on the basis of the carrier, the advanced phase $\theta_v$, the reference phase $\theta_e$, the direct-current voltage $V_{dc}$, and the voltage amplitude command $V^*$.

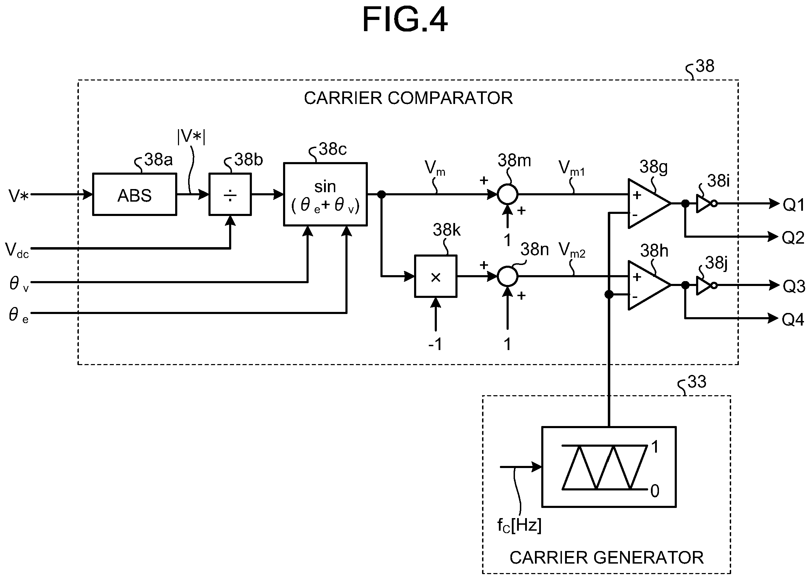

FIG. 4 is a block diagram illustrating an example of the carrier comparator 38 illustrated in FIG. 3. FIG. 4 illustrates detailed configurations of the carrier comparator 38 and the carrier generator 33.

In FIG. 4, a carrier frequency $f_c$[Hz] as the frequency of the carrier is set in the carrier generator 33. A triangular carrier that rises and falls between "0" and "1", as an example of a carrier waveform, is pointed by an arrow of the carrier frequency $f_c$. The PWM control of the inverter 11 includes synchronous PWM control and asynchronous PWM control. In the case of synchronous PWM control, the carrier needs to be synchronized with the advanced phase $\theta_v$. In contrast, in the case of asynchronous PWM control, the carrier need not be synchronized with the advanced phase $\theta_v$.

As illustrated in FIG. 4, the carrier comparator 38 includes an absolute value computer 38a, a divider 38b, a multiplier 38c, a multiplier 38k, an adder 38m, an adder 38n, a comparator 38g, a comparator 38h, an output inverter 38i, and an output inverter 38j.

In the absolute value computer 38a, an absolute value |V*| of the voltage amplitude command V* is computed. In the divider 38b, the absolute value |V*| is divided by the direct-current voltage $V_{dc}$ detected by the voltage sensor 20. In the configuration in FIG. 4, the output of the divider 38b is a modulation factor. A battery voltage, which is an output voltage of the battery 10 varies by a continuous flow of current. In the meantime, the absolute value |V*| is divided by the direct-current voltage $V_{dc}$ so as to adjust the value of the modulation factor, which can prevent the motor applied voltage from being lower due to a decrease in the battery voltage.

In the multiplier 38c, a sine value of "$\theta_e+\theta_v$" obtained by addition of the advanced phase $\theta_v$ to the reference phase $\theta_e$ is computed. The modulation factor, which is the output of the divider 38b, is multiplied by the computed sine value of "$\theta_e+\theta_v$". In the multiplier 38k, the voltage command $V_m$, which is the output of the multiplier 38c, is multiplied by "-1". In the adder 38m, "1" is added to the voltage command $V_m$, which the output of the multiplier 38c. In the adder 38n, "1" is added to the output of the multiplier 38k, that is an inverted output of the voltage command $V_m$. The output of the adder 38m is input to the comparator 38g as a first voltage command $V_{m1}$ for driving the two switching elements 51 and 53 of the upper arm among the switching elements 51 to 54. The output of the adder 38n is input to the comparator 38h as a second voltage command $V_{m2}$ for driving the two switching elements 52 and 54 of the lower arm.

In the comparator 38g, the first voltage command $V_{m1}$ is compared with the amplitude of the carrier. The output of the output inverter 38i, which is obtained by inversion of the output of the comparator 38g, is a PWM signal Q1 for the switching element 51, and the output of the comparator 38g is a PWM signal Q2 for the switching element 52. Similarly, in the comparator 38h, the second voltage command $V_{m2}$ is compared with the amplitude of the carrier. The output of the output inverter 38j, which is obtained by inversion of the output of the comparator 38h, is a PWM signal Q3 for the switching element 53, and the output of the comparator 38h is a PWM signal Q4 for the switching element 54. With the output inverter 38i, the switching element 51 and the switching element 52 are not ON at the same time, and with the output inverter 38j, the switching element 53 and the switching element 54 are not ON at the same time.

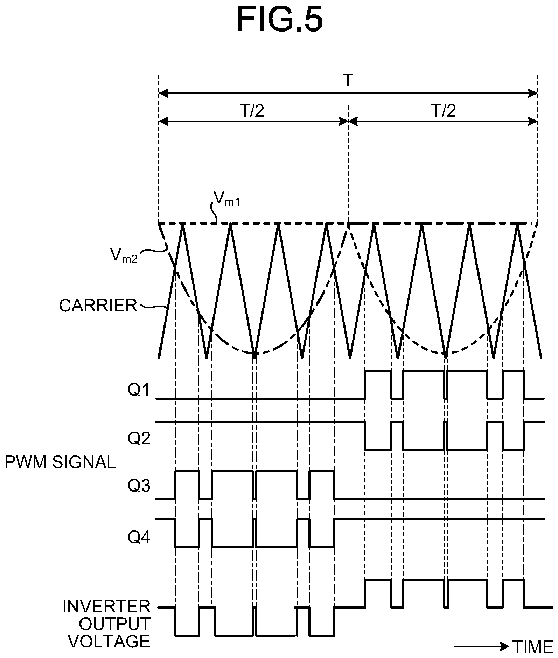

FIG. 5 is a timing diagram illustrating examples of main waveforms in the carrier comparator 38 illustrated in FIG. 4. FIG. 5 illustrates a waveform of the first voltage command $V_{m1}$ output from the adder 38m, a waveform of the second voltage command $V_{m2}$ output from the adder 38n, waveforms of the PWM signals Q1 to Q4, and a waveform of the inverter output voltage. Note that, in FIG. 5, a waveform part of the first voltage command $V_{m1}$ at which the amplitude value is larger than a peak of the carrier and a waveform part of the second voltage command $V_{m2}$ at which the amplitude value is larger than a peak of the carrier are expressed by flat lines for convenience.

The PWM signal Q1 is "low" when the first voltage command $V_{m1}$ is larger than the carrier, and "high" when the first voltage command $V_{m1}$ is smaller than the carrier. The PWM signal Q2 is an inverted signal of the PWM signal Q1. The PWM signal Q3 is "low" when the second voltage command $V_{m2}$ is larger than the carrier, and "high" when the second voltage command $V_{m2}$ is smaller than the carrier. The PWM signal Q4 is an inverted signal of the PWM signal Q3. While the circuit illustrated in FIG. 4 exhibits "low active" as described above, the circuit may be "high active" in which the respective signals have inverted values.

As illustrated in FIG. 5, the waveform of the inverter output voltage includes voltage pulses caused by the differential voltage between the PWM signal Q1 and the PWM signal Q4, and voltage pulses caused by the differential voltage between the PWM signal Q3 and the PWM signal Q2. These voltage pulses are applied as the motor applied voltage to the single-phase motor 12.

According to the waveforms illustrated in FIG. 5, the switching operation of the switching elements 51 and 52 is paused during one half cycle of one cycle T of the voltage command $V_m$, and the switching operation of the switching elements 53 and 54 is paused during the other half cycle of one cycle T of the voltage command $V_m$.

In addition, according to the waveform illustrated in FIG. 5, the switching element 52 is controlled to be always ON during the one half cycle of one cycle T of the voltage command $V_m$, and the switching element 54 is controlled to be always ON during the other half cycle of one cycle T of the voltage command $V_m$. Note that FIG. 5 is an example, and there can be a case where the switching element 51 is controlled to be always ON during one half cycle and the switching element 53 is controlled to be always ON during the other half cycle. Thus, the waveforms illustrated in FIG. 5 is characteristic in that at least one of the switching elements 51 to 54 is controlled to be ON during a half cycle of the voltage command $V_m$.

For the modulation method used in generation of the PWM signals Q1 to Q4, bipolar modulation and unipolar modulation are known. Bipolar modulation is a modulation method of outputting voltage pulses that vary by a positive or negative potential every cycle of the voltage command $V_m$. Unipolar modulation is a modulation method of outputting voltage pulses that vary between three potentials, that is, a positive potential, a negative potential, and a zero potential, every cycle of the voltage command $V_m$. The waveform of the inverter output voltage illustrated in FIG. 5 is produced by unipolar modulation. In the motor driver 2 of the present embodiment, any modulation method may be used. Note that, in an application in which the motor current waveform needs to be controlled to be a more precise sine wave, use of unipolar modulation, in which the harmonic content is smaller than in bipolar modulation, is preferable.

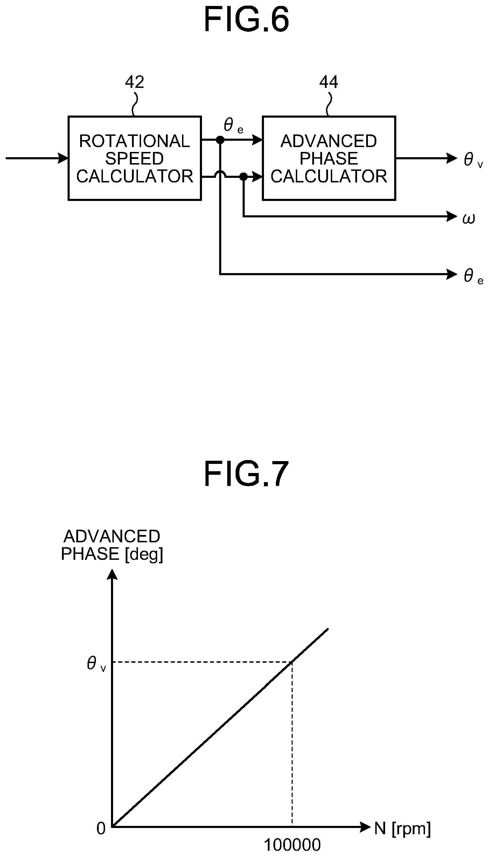

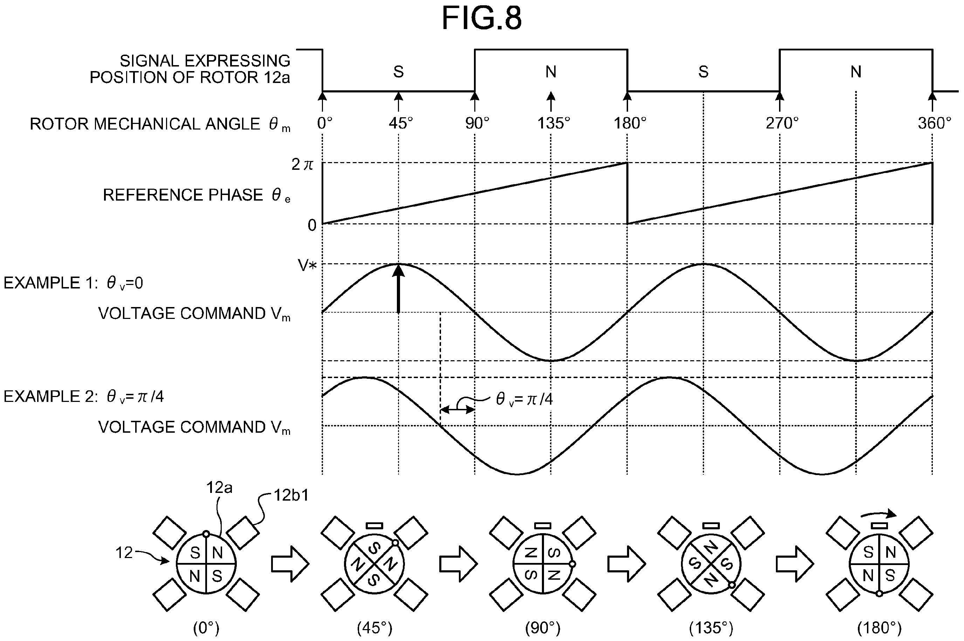

Next, advance control in the present embodiment will be explained with reference to FIGS. 6 to 8. FIG. 6 is a block diagram illustrating a functional configuration for calculating the advanced phase $\theta_v$ to be input to the carrier comparator 38 illustrated in FIG. 4. FIG. 7 is a graph illustrating an example of a method for calculating the advanced phase $\theta_v$ in the embodiment. FIG. 8 is a timing diagram used for explaining the relation between the voltage command $V_m$ and the advanced phase $\theta_v$ illustrated in FIG. 4.

The function of calculating the advanced phase $\theta_v$ can be implemented by the rotational speed calculator 42 and the advanced phase calculator 44 as illustrated in FIG. 6. The rotational speed calculator 42 calculates the rotational speed $\omega$ of the single-phase motor 12 on the basis of the current signal Ima detected by the current detecting unit 22. In addition, on the basis of the current signal Ima, the rotational speed calculator 42 calculates: the rotor mechanical angle $\theta_m$, which is an angle from the reference position of the rotor 12a; and the reference phase $\theta_e$, which is obtained by converting the rotor mechanical angle $\theta_m$ into an electrical angle.

Note that, at the top of FIG. 8, the position of the rotor 12a is expressed by a signal level. In the waveform at the top, an edge of the signal falling from "H" to "L" is assumed to be the reference position of the rotor 12a, and the reference position is set to "0°" of the rotor mechanical angle $\theta_m$. In addition, under a sequence of numerical values indicating the rotor mechanical angle $\theta_m$, the reference phase $\theta_e$, which is a phase obtained by converting the rotor mechanical angle $\theta_m$ into an electrical angle, is illustrated. The advanced phase calculator 44 calculates the advanced phase $\theta_v$ on the basis of the rotational speed $\omega$ and the reference phase $\theta_e$ calculated by the rotational speed calculator 42.

The horizontal axis of FIG. 7 represents the rotational speed N, and the vertical axis of FIG. 7 represents the advanced phase $\theta_v$. As illustrated in FIG. 7, the advanced phase $\theta_v$ can be determined by using a function of the advanced phase $\theta_v$ increasing with the increase in the rotational speed N. While the advanced phase $\theta_v$ is determined by a linear function in the example of FIG. 7, this is not limited to a linear function. A function other than a linear function may be used, as long as the function has a relation in which the advanced phase $\theta_v$ is equal or increases with the increase in the rotational speed N.

At the middle of FIG. 8, two examples of waveforms of the voltage command $V_m$ are illustrated as "EXAMPLE 1" and "EXAMPLE 2". In addition, at the bottom of FIG. 8, the states of the rotor 12a in which the rotor mechanical angle $\theta_m$ is 0°, 45°, 90°, 135°, and 180° when the rotor 12a rotates clockwise are illustrated. The rotor 12a of the single-phase motor 12 includes four magnets, and four teeth 12b1 are arranged around the outer circumference of the rotor 12a. When the rotor 12a turns clockwise, the rotor mechanical angle $\theta_m$ is estimated on the basis of the current signal Ima, and the reference phase $\theta_e$ converted into an electrical angle is calculated on the basis of the estimated rotor mechanical angle $\theta_m$.

The voltage command $V_m$ illustrated as "EXAMPLE 1" at the middle of FIG. 8 is a voltage command in a case of the advanced phase $\theta_v$=0. In the case of the advanced phase $\theta_v$=0, the voltage command $V_m$ of the same phase with the reference phase $\theta_e$ is output. Note that the amplitude of the voltage command $V_m$ in this case is determined on the basis of the voltage amplitude command V* described above.

In addition, the voltage command $V_m$ illustrated as "EXAMPLE 2" at the middle of FIG. 8 is a voltage command in a case of the advanced phase $\theta_v$=$\pi$/4. In the case of the advanced phase $\theta_v$=$\pi$/4, a voltage command $V_m$ advanced by $\pi$/4, which is a component of the advanced phase $\theta_v$, from the reference phase $\theta_e$ is output.

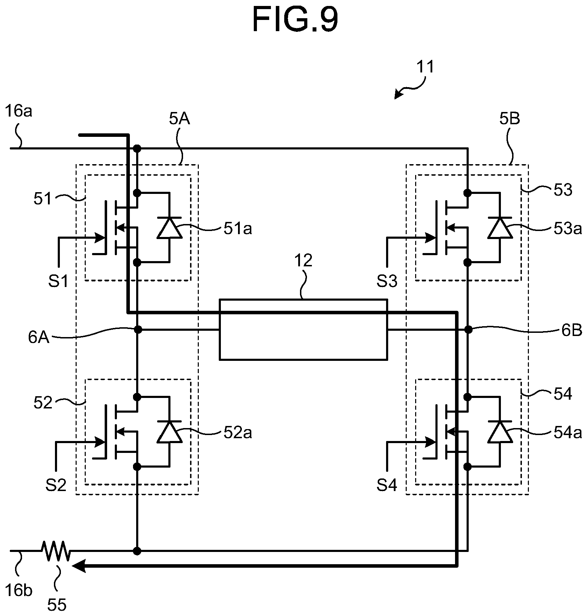

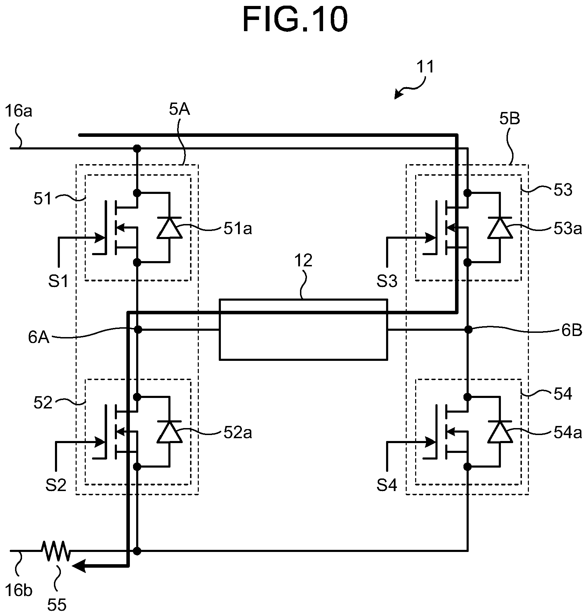

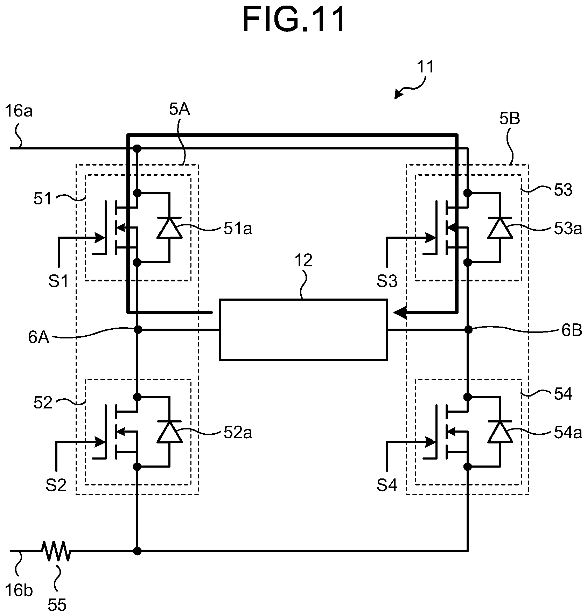

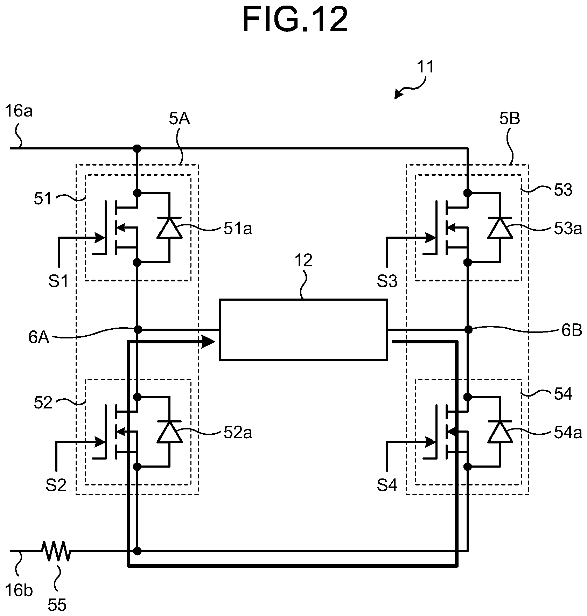

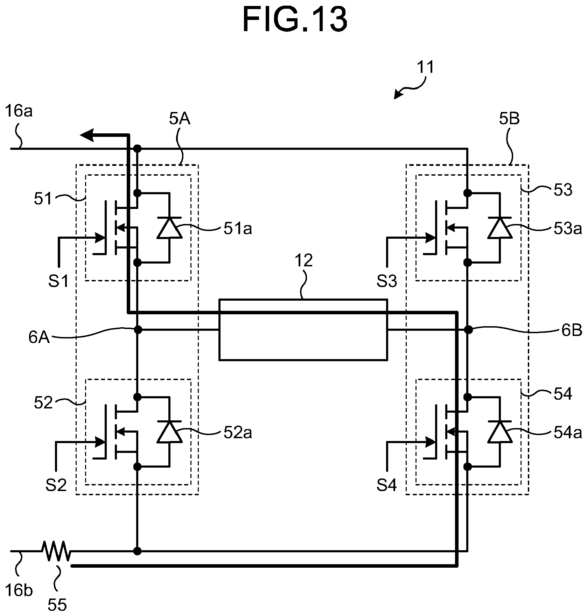

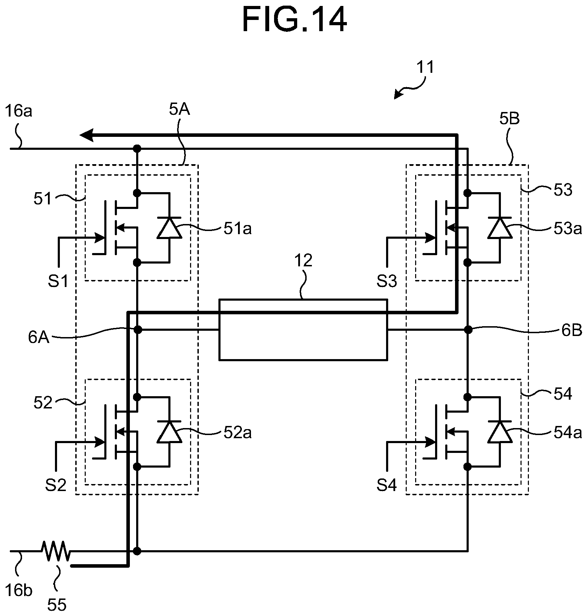

Next, operation patterns of the inverter 11 will be explained with reference to FIGS. 9 to 14. FIG. 9 is a diagram illustrating one of current paths when power is supplied from the battery 10 to the single-phase motor 12 in FIG. 2. FIG. 10 is a diagram illustrating another of the current paths when power is supplied from the battery 10 to the single-phase motor 12 in FIG. 2. FIG. 11 is a diagram illustrating one of current paths when the inverter 11 performs a flywheel operation in FIG. 2. FIG. 12 is a diagram illustrating another of the current paths when the inverter 11 performs a flywheel operation in FIG. 2. FIG. 13 is a diagram illustrating one of current paths when the energy of the single-phase motor 12 is regenerated into the battery 10 in FIG. 2. FIG. 14 is a diagram illustrating another of the current paths when the energy of the single-phase motor 12 is regenerated into the battery 10 in FIG. 2.

First, in FIG. 9, driving signals S1 and S4 turn the switching elements 51 and 54 ON, and current flows through the switching element 51, the single-phase motor 12, the switching elements 54, and the shunt resistor 55 in this order. In FIG. 10, driving signals S2 and S3 turn the switching elements 52 and 53 ON, and current flows through the switching element 53, the single-phase motor 12, the switching element 52, and the shunt resistor 55 in this order. In either case, power is supplied from the battery 10 to the single-phase motor 12. In addition, in either case, current flows to the shunt resistor 55.

Next, FIGS. 11 and 12 will be explained. FIGS. 11 and 12 illustrate switching patterns in which driving signals S1 and S3 or driving signals S2 and S4 are simultaneously turned ON to cause flyback (also referred to as "flywheel"). In FIG. 11, the driving signals S1 and S3 turn the switching elements 51 and 53 ON, and flywheel current flowing out from the single-phase motor 12 returns to the single-phase motor 12 via the switching element 51 and the switching element 53. In addition, in FIG. 12, the driving signals S2 and S4 turn the switching elements 52 and 54 ON, and flywheel current flowing out from the single-phase motor 12 returns to the single-phase motor 12 via the switching element 54 and the switching element 52. What is characteristic in these operations is that the current does not flow through the shunt resistor 55 in either of the switching patterns in FIGS. 11 and 12.

Next, FIGS. 13 and 14 will be explained. FIGS. 13 and 14 both illustrate operations when the energy of the single-phase motor 12 is regenerated into the battery 10. In FIG. 13, the driving signals S1 and S4 turn the switching elements 51 and 54 ON, and regenerative current flowing out from the single-phase motor 12 returns to the single-phase motor 12 via the switching element 51, the battery 10, which is not illustrated in FIG. 13, the shunt resistor 55, and the switching element 54. In addition, in FIG. 14, the driving signals S2 and S3 turn the switching elements 52 and 53 ON, and regenerative current flowing out from the single-phase motor 12 returns to the single-phase motor 12 via the switching element 53, the battery 10, which is not illustrated in FIG. 14, the shunt resistor 55, and the switching element 52. In either case, current flows to the shunt resistor 55.

As is clear from the explanation above, current flows to the shunt resistor 55 except for the switching patterns in FIGS. 11 and 12. Thus, it can be seen that, when the inverter 11 is caused to operate so that the switching patterns illustrated in FIGS. 11 and 12 will not occur, the motor current Im can be detected in all periods.

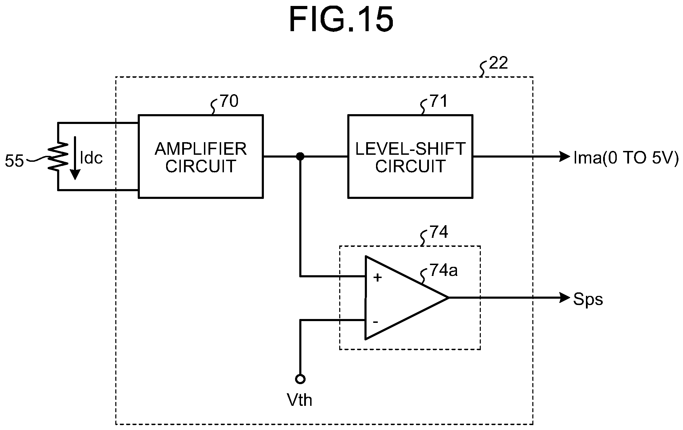

Next, the current detecting unit in the present embodiment will be described. FIG. 15 is a diagram illustrating an example of a configuration of the current detecting unit 22 illustrated in FIG. 1. In FIG. 15, the current detecting unit 22 includes an amplifier circuit 70, a level-shift circuit 71, and a protector 74. In addition, the protector 74 includes a comparator 74a. The protector 74 is a component for generating the protection signal Sps. Thus, a protecting function is added to the current detecting unit 22 illustrated in FIG. 15.

The amplifier circuit 70 amplifies the voltage across the ends of the shunt resistor 55 caused by shunt current Idc flowing through the shunt resistor 55. The shunt resistor 55 is a current detector for detecting the shunt current Idc flowing through the shunt resistor 55. An output value of the shunt resistor 55 is a voltage value. Thus, the shunt resistor 55 is a detector for detecting a physical quantity corresponding to the shunt current Idc flowing through the shunt resistor 55. Because the shunt resistor 55 is disposed on a current path from the battery 10 to the single-phase motor 12, the shunt resistor 55 preferably has a very small resistance in view of loss and heat generation. Thus, the voltage across the ends of the shunt resistor 55 when the shunt current Idc flows is a very low value. The configuration including the amplifier circuit 70 as illustrated in FIG. 15 is therefore a desired configuration.

The level-shift circuit 71 shifts the output level of the amplifier circuit 70 so that a signal output from the level-shift circuit 71 has a level that can be input to the processor 31.

A typical example of the processor 31 is a microcomputer. A microcomputer is typically configured to detect positive voltage of about 0 to 5 V, and does not support negative voltage of up to 5 V. As illustrated in FIGS. 9, 10, 13, and 14, however, the direction of the current flowing through the shunt resistor 55 changes. As a result, a negative voltage may be generated depending on the polarity of the current. Thus, in a case where the maximum value of output voltage of the microcomputer is 5 V, for example, a zero point is set with an offset of about 2.5 V. A range of 0 to 2.5 V is then assumed to be negative voltage, and a range of 2.5 to 5 V is assumed to be positive voltage. This function is served by the level-shift circuit 71. The level-shift circuit 71 enables input to an AD input terminal, which is not illustrated, of the processor 31. In addition, the processor 31 converts the output of the level-shift circuit 71, which is a voltage value, into a current value, which enables detection of positive and negative currents. Alternatively, a range of 0 to 2.5 V may be assumed to be positive voltage and a range of 2.5 to 5 V may be assumed to be negative voltage, and the processor 31 may perform positive/negative reversed processing.

The protector 74 generates the protection signal Sps on the basis of an amplified signal obtained by amplification by the amplifier circuit 70, and outputs the protection signal Sps. Specifically, the protector 74: compares, by the comparator 74a, the level of the amplified signal output from the amplifier circuit 70 with a protection threshold Vth; and generates the protection signal Sps when the level of the amplified signal is larger than the protection threshold Vth. The protection signal Sps is input to the processor 31. Upon receiving the protection signal Sps, the processor 31 stops generation of PWM signals for driving the switching elements of the inverter 11 so as to protect the inverter 11.

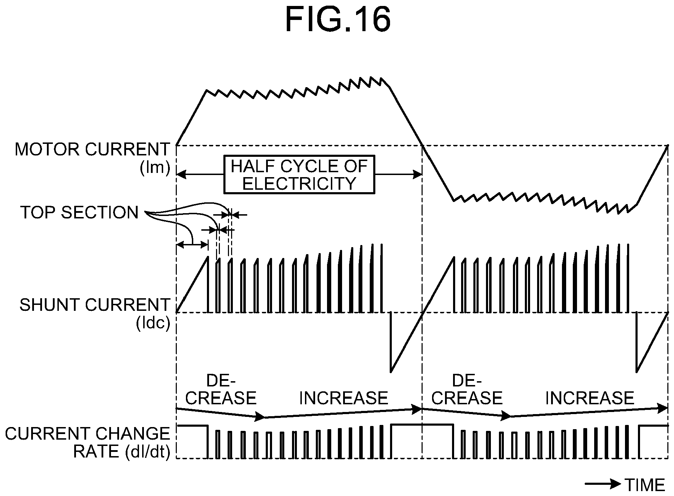

Next, main points, operations, and effects of control in the embodiment will be explained. FIG. 16 is a diagram illustrating examples of several types of waveforms used for explanation of the main points of control in the embodiment.

At a top part of FIG. 16, a waveform of one cycle of the motor current Im is illustrated. The direction in which the motor current Im flows is reversed every half cycle of electricity. Thus, a half cycle of electricity is also a period from when the motor current Im is commutated until when the motor current Im is commutated again. In other words, a half cycle of electricity is "a period during which the polarity of the motor current remains the same".

The motor current Im of every half cycle of electricity is maintained by frequent control of conduction of the individual switching elements of the inverter 11.

At a middle part of FIG. 16, a waveform of the shunt current Idc when the motor current Im illustrated at the top part flows is illustrated. As described above, current does not flow to the shunt resistor 55 in the switching patterns in FIGS. 11 and 12. Thus, the waveform of the shunt current Idc has pulse trains of pulse-shaped waveforms as illustrated in FIG. 16. Note that triangular waves appearing at a rise and at a fall of the motor current Im are also included in the pulses. In addition, a section from a rise to a fall of each pulse is defined as a "top section" of the pulse.

At a bottom part of FIG. 16, a waveform of the current change rate dI/dt obtained by differentiating the shunt current Idc illustrated at the middle part with time is illustrated. Note that the value of the current change rate dI/dt is a representative value calculated by approximating between a start point at which the top section of each pulse of the shunt current Idc starts and an end point at which the top section ends by a line for convenience sake.

What is characteristic of the current change rate dI/dt illustrated at the bottom part of FIG. 16 is that the value of the current change rate dI/dt at the top section of each pulse tends to decrease once and increase thereafter. This tendency is repeated every half cycle of electricity of the motor current Im.

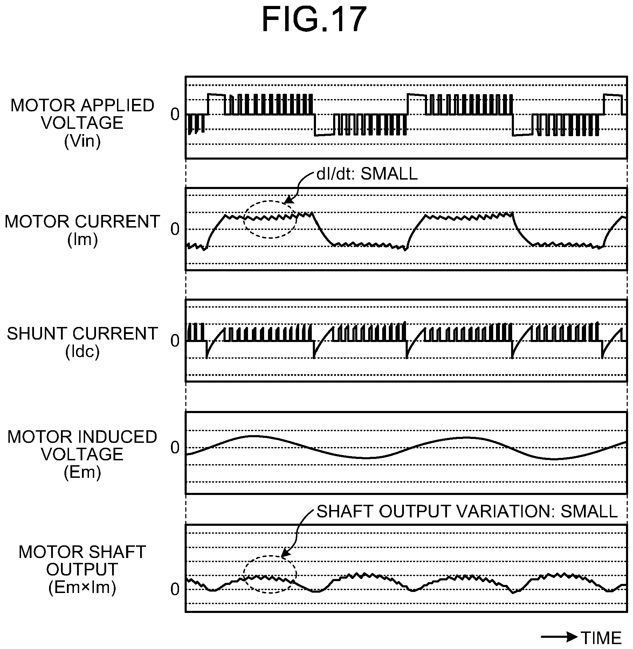

FIG. 17 is a diagram illustrating examples of several types of waveforms used for explanation of effects in the embodiment. At a top part of FIG. 17, a waveform of the motor applied voltage Vin is illustrated. At an upper-middle part of FIG. 17, a waveform of the motor current Im when the motor applied voltage Vin illustrated at the top part is applied to the single-phase motor 12 is illustrated. At a middle part of FIG. 17, a waveform of the shunt current Idc when the motor current Im illustrated at the upper-middle part flows is illustrated. At a lower-middle part of FIG. 17, a waveform of the motor induced voltage Em induced in the single-phase motor 12 when the motor applied voltage Vin illustrated at the top part is applied to the single-phase motor 12 is illustrated. At a bottom part of the FIG. 17, a waveform of the motor shaft output is illustrated. The motor shaft output has a waveform of "Em×Im", which is a product of the motor induced voltage Em and the motor current Im.

As described above, the motor shaft output is expressed as "Em×Im". Thus, in order to make the variation of the motor shaft output smaller, the variation of the motor current Im around a peak value of the motor induced voltage Em may be made smaller. Note that, in the present embodiment, the switching elements of the inverter 11 are controlled so that the current change rate dI/dt exhibits a tendency to decrease once and increase thereafter as illustrated at the bottom part of FIG. 16. The value of the current change rate dI/dt and the variation of the motor current Im are equivalent to each other. In addition, the tendency of the current change rate dI/dt decreasing once and increasing thereafter is equivalent to making the variation of the motor current Im around a peak value of the motor induced voltage Em smaller. Thus, when the control of the present embodiment is performed, the variation of the motor current Im around a peak value of the motor induced voltage Em can be made smaller, which can make the variation of the motor shaft output smaller.

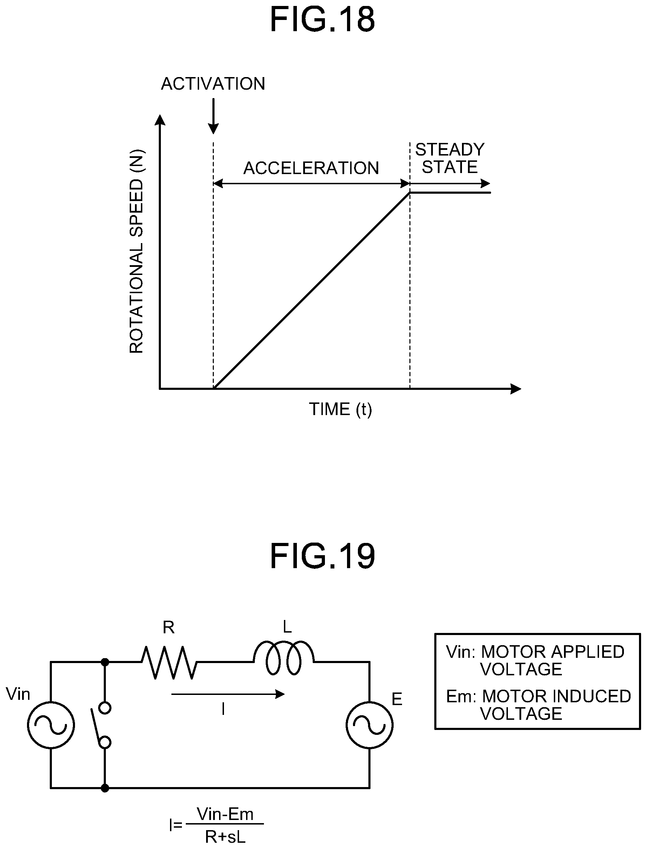

FIG. 18 is a graph illustrating an operating curve used for explaining the operations in the embodiment. The horizontal axis represents time, and the vertical axis represents rotational speed N. An application product such as a vacuum cleaner and a hand dryer, which will be described later, is typically caused to operate in accordance with an operating curve including an acceleration period in which the rotational speed N is increased after activation, and a steady-state period in which the increased rotational speed N is maintained as illustrated in FIG. 18.

FIG. 19 is a diagram illustrating an equivalent circuit of the single-phase motor 12 used for explaining operations in the embodiment. In the equivalent circuit of FIG. 19, Vin represents the motor applied voltage, Em represents the motor induced voltage, R represents the resistance of the stator coil of the single-phase motor 12, and L represents the inductance of the stator coil. In this case, current I flowing in the equivalent circuit is expressed by the following formula.

$$I = (Vin - Em) / (R + sL) \, ... \, (1)$$

In the formula (1), s represents a Laplace operator. The current I expressed by the formula (1) corresponds to the motor current Im.

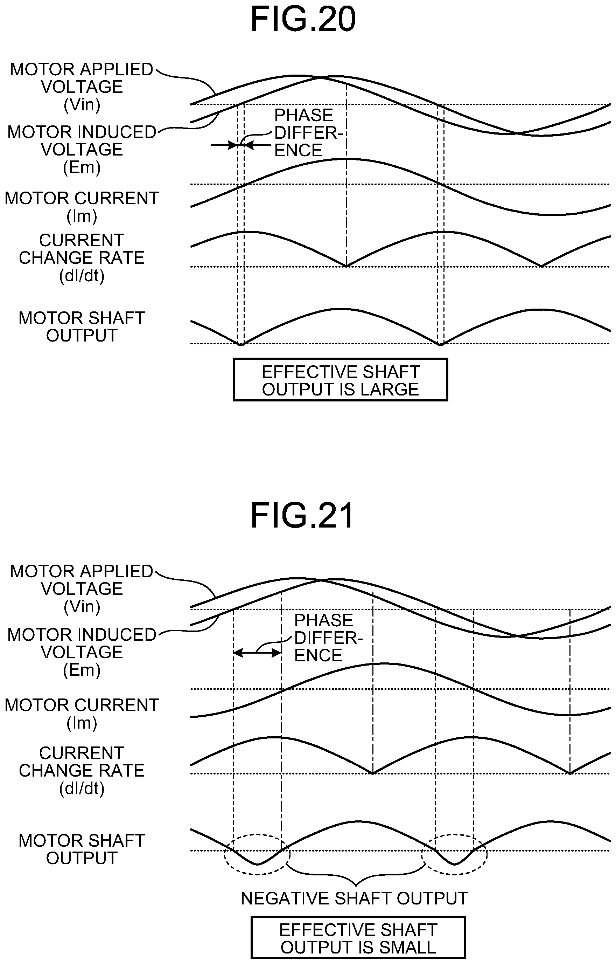

FIG. 20 is a first diagram illustrating examples of several types of waveforms used for explaining main points and effects of control in the embodiment. FIG. 21 is a second diagram illustrating examples of several types of waveforms used for explaining main points and effects of control in the embodiment. In each of FIGS. 20 and 21, the waveforms of the motor applied voltage Vin, the motor induced voltage Em, the motor current Im, the current change rate dI/dt, and the motor shaft output are illustrated in this order from the top. Note that, in these drawings, fundamental wave components are illustrated.

At activation and in a low-speed rotation region immediately after activation, the influence of the inductance L is small because the rotational speed is low. Thus, the phase difference between the motor induced voltage Em and the motor current Im is small. In FIG. 20, an example of a case where the phase difference between the motor induced voltage Em and the motor current Im is relatively small is illustrated. When focus is placed on the waveform of the shaft output in FIG. 20, the value of the shaft output in a region corresponding to the phase difference is negative. The shaft output in a region in which the value thereof is positive is effective shaft output. Thus, in the example of FIG. 20, the effective shaft output is large.

In contrast, during acceleration after activation, the influence of the inductance L increases with the increase in the rotational speed N, and the phase difference between the motor induced voltage Em and the motor current Im thus increases. In FIG. 21, an example of a case where the phase difference between the motor induced voltage Em and the motor current Im is larger than that in FIG. 20 is illustrated. Because the value of the shaft output in a region corresponding to the phase difference is negative, the effective shaft output is small in the example of FIG. 21.

For controlling the value of the current change rate dI/dt in the top section of a pulse of the shunt current Idc to increase after decreasing, it is therefore important to control the motor applied voltage Vin, that is, the inverter output voltage so that the phase difference between the motor induced voltage Em and the motor current Im becomes smaller. In this manner, the influence of the inductance increasing with the increase in the rotational speed can be offset, which is effective in obtaining sufficient motor shaft output, which otherwise tends to be insufficient in a high-speed rotation region.

As described above, according to the motor driver according to the embodiment, the controller performs first control of controlling conduction of the first to fourth switching elements so that a waveform of physical quantities detected by the current detector corresponds to a pulse train of a plurality of pulses. As a result of the first control, the current change rate in the top section of each pulse in a period during which the polarity of the motor current flowing to the single-phase motor remains the same is controlled to exhibit the tendency to decrease once and increase thereafter. This can reduce the variation of the shaft output of the single-phase motor, which can suppress vibration and noise, and thus can reduce discomfort for users.

The first control can be performed at least during part of an operation section in which the single-phase motor is caused to perform an acceleration operation. In the section during which the single-phase motor is caused to perform the acceleration operation, the variation of the shaft output of the single-phase motor is large. Thus, in the period during which the single-phase motor is caused to perform the acceleration operation, the variation of the shaft output can be made smaller by performing the first control, which is effective in suppressing vibration and noise.

Note that, in performing the first control, it is preferable to control the output voltage of the inverter so that the phase difference between the motor induced voltage generated in the single-phase motor and the motor current becomes smaller. By performing such a control, an effective shaft output can be obtained. This enables suppression of vibration and noise while shortening the time until the rotational speed becomes a steady-state rotational speed.

Next, an example of application of the motor driver according to the embodiment will be described. FIG. 12 is a configuration diagram of a vacuum cleaner 61 including the motor driver 2 according to the embodiment. The vacuum cleaner 61 includes: the battery 10 illustrated in FIG. 1; the motor driver 2 illustrated in FIG. 1; a motor fan 64 driven by the single-phase motor 12 illustrated in FIG. 1; a dust chamber 65; a sensor 68; a suction port assembly 63; an extension tube 62; and an operation part 66.

A user using the vacuum cleaner 61 holds the operation part 66 to manipulate the vacuum cleaner 61. The motor driver 2 of the vacuum cleaner 61 drives the motor fan 64 by using the battery 10 as power supply. When the motor fan 64 is driven, dust is sucked through the suction port assembly 63. The sucked dust is collected into the dust chamber 65 via the extension tube 62.

The vacuum cleaner 61 is a product with the rotational speed of the single-phase motor 12 changing from 0 [rpm] to over 100,000 [rpm]. For driving a such a product in which the single-phase motor 12 rotates at high speed, it is difficult to adjust A-D conversion timing with the current detection method of the related art because high carrier frequency is necessary, the detection is further difficult because the switching time is shorter, and the control technique according to the embodiment described above is therefore suitable therefor.

In addition, for outputting voltage based on a voltage command to the single-phase motor 12, the controller 25 pauses the switching operations of the first switching element of the upper arm and the second switching element of the lower arm during one half cycle of the cycle of the voltage command, and pauses the switching operations of the third switching element of the upper arm and the fourth switching element of the lower arm during the other half cycle of the cycle of the voltage command. As a result, switching loss is prevented from increasing, and an efficient vacuum cleaner 61 can be achieved.

In addition, the vacuum cleaner 61 according to the embodiment can be reduced in size and weight by simplification of the radiator described above. Furthermore, the vacuum cleaner 61 does not include a current sensor for detecting current, and does not include a high-speed analog-to-digital converter, thus the vacuum cleaner 61 that suppresses design cost and manufacture cost can be achieved.

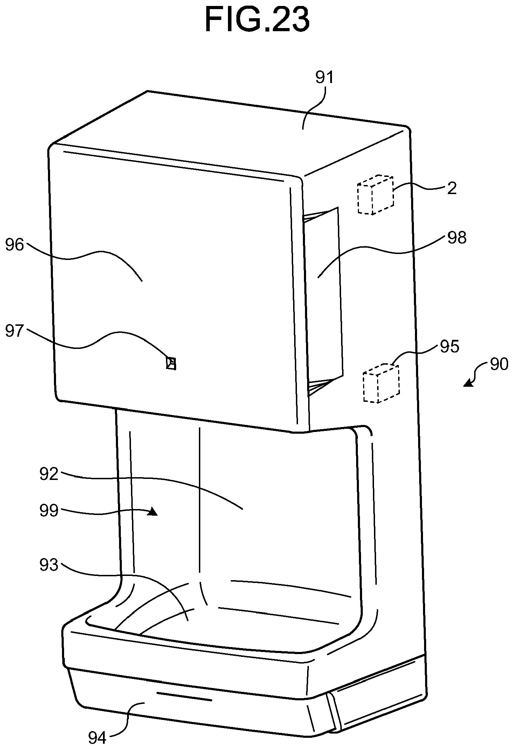

FIG. 23 is a configuration view of a hand dryer 90 including the motor driver 2 according to the embodiment. The hand dryer 90 includes: the motor driver 2; a casing 91; a hand detecting sensor 92; a water receiver 93; a drain receptacle 94; a cover 96; a sensor 97; an inlet port 98; and a motor fan 95. Note that the sensor 97 is either of a gyro sensor and a motion sensor. In the hand dryer 90, when hands are inserted in a hand insertion part 99 above the water receiver 93, water is blown away by a blow caused by the motor fan 95, and the blown water is collected by the water receiver 93, and then accumulated in the drain receptacle 94.

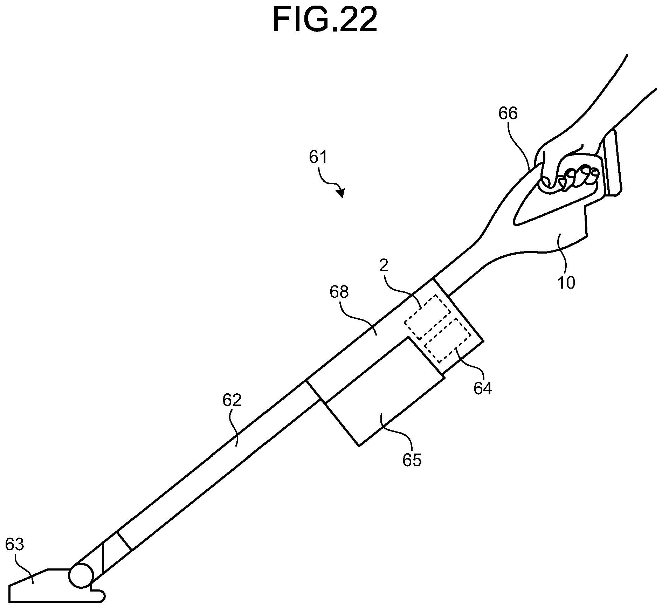

In a manner similar to the vacuum cleaner 61 illustrated in FIG. 22, the hand dryer 90 is a product with the motor speed changing from 0 [rpm] to over 100,000 [rpm]. Thus, the control technique according to the embodiment described above is also suitable for the hand dryer 90, and effects similar to those of the vacuum cleaner 61 can be obtained.

In addition, there have been demands for miniaturization and higher output of the vacuum cleaner 61 and the hand dryer 90 in terms of comfort and installation constraints. For miniaturization and higher output, the battery current supplied from the battery 10 to the inverter 11 needs to be increased. When the battery current increases, however, heat generation due to impedance inside the battery 10 is a problem. Thus, the battery 10 with small impedance therein is more preferable. In addition, as the battery current increases, the motor current $Im$ also increases. The variation of the shaft output is therefore large according to the technique of the related art. For the reason as described above, a battery 10 with smaller impedance therein is better to achieve the effects of the present embodiment.

Furthermore, while examples of configurations in which the motor driver 2 is applied to the vacuum cleaner 61 and the hand dryer 90 have been described in the present embodiment, the configurations are not limited to the examples. The motor driver 2 is widely applicable to electrical appliances with motors. Examples of electrical appliances with motors include an incinerator, a crushing machine, a dryer, a dust collector, a printer, a cleaning machine, confectionery equipment, a tea manufacturing machine, a wood working machine, a plastic extruding machine, a cardboard producing machine, a packaging machine, a hot air generator, office automation equipment, and a motor fan. A motor fan is air blowing means for object transportation, dust attraction, or general air supply and exhaust.

Note that the configurations presented in the embodiment above are examples of the present invention, and can be combined with other known technologies or can be partly omitted or modified without departing from the scope of the present invention.

For example, while the PWM signals Q1 to Q4 are generated on the basis of comparison with a carrier in FIGS. 4 and 5, the generation of the signals is not limited to this technique. The generation of the PWM signals Q1 to Q4 may be based on time management, and the PWM signals Q1 to Q4 may be generated by computation processes performed by the processor 31.

Reference Signs List

1 motor driving system; 2 motor driver; 5A, 5B leg; 6A, 6B connection point; 10 battery; 11 inverter; 12 single-phase motor; 12a rotor; 12b stator; 12b1 tooth; 16a, 16b direct-current bus; 20 voltage sensor; 22 current detecting unit; 25 controller; 31 processor; 32 driving signal generator; 33 carrier generator; 34 memory; 38 carrier comparator 38a absolute value computer; 38b divider; 38c, 38k multiplier; 38g, 38h comparator; 38i, 38j output inverter; 38m, 38n adder; 42 rotational speed calculator; 44 advanced phase calculator; 51, 52, 53, 54 switching element; 51a, 52a, 53a, 54a body diode; 55 shunt resistor; 61 vacuum cleaner; 62 extension tube; 63 suction port assembly; 64 motor fan; 65 dust chamber; 66 operation part; 68 sensor; 70 amplifier circuit; 71 level-shift circuit; 74 protector; 74a comparator; 90 hand dryer; 91 casing; 92 hand detecting sensor; 93 water receiver; 94 drain receptacle; 95 motor fan; 96 cover; 98 inlet port; 99 hand insertion part.

**Claims**

1. A motor driver comprising:

   an inverter including a first leg including a first switching element of an upper arm and a second switching element of a lower arm connected in series, and a second leg including a third switching element of the upper arm and a fourth switching element of the lower arm connected in series, the first leg and the second leg being connected in parallel with a direct-current power supply, the inverter converting direct-current power supplied from the direct-current power supply into alternating-current power, and supplying the alternating-current power to a single-phase motor; and
   a current detector disposed on a path between the inverter and the direct-current power supply, wherein
   the motor driver performs first control of controlling conduction of the first to fourth switching elements so that a waveform of physical quantities detected by the current detector corresponds to a pulse train of a plurality of pulses, and
   as a result of the first control, a current change rate in a top section of each of the pulses in a period during which polarity of motor current flowing to the single-phase motor remains same exhibits a tendency to decrease once and increase thereafter.

2. The motor driver according to claim 1, wherein the first control is performed at least during a part of an operation period in which the single-phase motor is caused to perform an acceleration operation.

3. The motor driver according to claim 2, wherein in performing the first control, output voltage of the inverter is controlled so that a phase difference between induced voltage generated in the single-phase motor and the motor current becomes smaller.

4. The motor driver according to any one of claims 1 to 3, wherein
   the first to fourth switching elements are made of wide band gap semiconductors.

5. The motor driver according to claim 4, wherein the wide band gap semiconductors are silicon carbide, gallium nitride, or diamond.

6. A vacuum cleaner comprising the motor driver according to any one of claims 1 to 5.

7. A hand dryer comprising the motor driver according to any one of claims 1 to 5.

# FIG.1

# FIG.2

# FIG.3

# FIG.4

# FIG.5

# FIG.6

# FIG.7

# FIG.8

SIGNAL EXPRESSING POSITION OF ROTOR 12a

| S | N | S | N |

ROTOR MECHANICAL ANGLE $\theta_m$    0°    45°    90°    135°    180°    270°    360°

REFERENCE PHASE $\theta_e$    $2\pi$    0

EXAMPLE 1: $\theta_v = 0$

VOLTAGE COMMAND $V_m$    V*

EXAMPLE 2: $\theta_v = \pi/4$    $\theta_v = \pi/4$

VOLTAGE COMMAND $V_m$

(0°)    (45°)    (90°)    (135°)    (180°)

EP 4 068 617 A1

# FIG.9

# FIG.10

# FIG.11

# FIG.12

# FIG.13

# FIG.14

# FIG.15

# FIG.16

MOTOR CURRENT (Im)

HALF CYCLE OF ELECTRICITY

TOP SECTION

SHUNT CURRENT (Idc)

DE-CREASE  INCREASE  DE-CREASE  INCREASE

CURRENT CHANGE RATE (dI/dt)

TIME

# FIG.17

MOTOR APPLIED VOLTAGE (Vin)

MOTOR CURRENT (Im)

dI/dt: SMALL

SHUNT CURRENT (Idc)

MOTOR INDUCED VOLTAGE (Em)

MOTOR SHAFT OUTPUT (Em×Im)

SHAFT OUTPUT VARIATION: SMALL

TIME

# FIG.18

# FIG.19

$$I = \frac{Vin - Em}{R + sL}$$

Vin: MOTOR APPLIED VOLTAGE

Em: MOTOR INDUCED VOLTAGE

## FIG.20

MOTOR APPLIED VOLTAGE (Vin)

MOTOR INDUCED VOLTAGE (Em)

PHASE DIFFER-ENCE

MOTOR CURRENT (lm)

CURRENT CHANGE RATE (dI/dt)

MOTOR SHAFT OUTPUT

EFFECTIVE SHAFT OUTPUT IS LARGE

## FIG.21

MOTOR APPLIED VOLTAGE (Vin)

MOTOR INDUCED VOLTAGE (Em)

PHASE DIFFER-ENCE

MOTOR CURRENT (lm)

CURRENT CHANGE RATE (dI/dt)

MOTOR SHAFT OUTPUT

NEGATIVE SHAFT OUTPUT

EFFECTIVE SHAFT OUTPUT IS SMALL

# FIG.22

# FIG.23

# INTERNATIONAL SEARCH REPORT

| | International application No. |
|---|---|
| | PCT/JP2019/046832 |

| A. CLASSIFICATION OF SUBJECT MATTER |
|---|
| Int. Cl. H02P27/06(2006.01)i |
| FI: H02P27/06 |
| |
| According to International Patent Classification (IPC) or to both national classification and IPC |

| B. FIELDS SEARCHED |
|---|
| Minimum documentation searched (classification system followed by classification symbols) |
| Int. Cl. H02P27/06 |
| |
| |
| Documentation searched other than minimum documentation to the extent that such documents are included in the fields searched |
| Published examined utility model applications of Japan 1922-1996 |
| Published unexamined utility model applications of Japan 1971-2020 |
| Registered utility model specifications of Japan 1996-2020 |
| Published registered utility model applications of Japan 1994-2020 |
| Electronic data base consulted during the international search (name of data base and, where practicable, search terms used) |
| |
| |

## C. DOCUMENTS CONSIDERED TO BE RELEVANT

| Category* | Citation of document, with indication, where appropriate, of the relevant passages | Relevant to claim No. |
|---|---|---|
| Y | WO 2019/180936 A1 (MITSUBISHI ELECTRIC CORP.) 26 September 2019, paragraphs [0014], [0055]-[0059], [0129]-[0138], fig. 4, 7, 16, 18 | 1, 4-7 |
| Y | JP 2008-131770 A (HITACHI, LTD.) 05 June 2008, paragraphs [0010]-[0012], [0020]-[0027], fig. 1, 3, 4 | 1, 4-7 |
| Y | WO 2010/103565 A1 (HITACHI INDUSTRIAL EQUIPMENT SYSTEM CO., LTD.) 16 September 2010, paragraphs [0040]-[0042], fig. 1, 2 | 1, 4-7 |
| Y | JP 2007-116817 A (OMRON CORP.) 10 May 2007, paragraphs [0038], [0056], [0057], [0099]-[0101], fig. 1, 2, 10 | 1, 4-7 |

☒ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27.01.2020 | 10.02.2020 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
|---|
| PCT/JP2019/046832 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2015-023773 A (AISIN AW CO., LTD.) 02 February 2015, paragraphs [0059], [0088], fig. 3, 9 | 1-7 |

Form PCT/ISA/210 (continuation of second sheet) (January 2015)

INTERNATIONAL SEARCH REPORT

Information on patent family members

International application No.

PCT/JP2019/046832

| Patent Documents referred to in the Report | Publication Date | Patent Family | Publication Date |
|---|---|---|---|
| WO 2019/180936 A1 | 26.09.2019 | (Family: none) | |
| JP 2008-131770 A | 05.06.2008 | DE 102007054050 A1<br>CN 101188387 A | |
| WO 2010/103565 A1 | 16.09.2010 | (Family: none) | |
| JP 2007-116817 A | 10.05.2007 | (Family: none) | |
| JP 2015-023773 A | 02.02.2015 | US 2016/0126882 A1<br>paragraphs [0069],<br>[0099], fig. 3, 9<br>CN 105324932 A | |

Form PCT/ISA/210 (patent family annex) (January 2015)

**REFERENCES CITED IN THE DESCRIPTION**

**Patent documents cited in the description**

- JP 2017200433 A